# EUROPÄISCHE PATENTSCHRIFT

(11) **EP 0 725 948 B1**
(45) Veröffentlichungstag und Bekanntmachung des Hinweises auf die Patenterteilung: **27.01.1999**
(21) Anmeldenummer: 95900048.0
(22) Anmeldetag: 25.10.1994
(51) Int. Cl.: G05D 23/19, F03G 7/06

(54) **ELEKTROTHERMISCHER STELLANTRIEB FÜR REGEL- UND ABSPERRARMATUREN AN HEIZ- UND KLIMATECHNISCHEN ANLAGEN**
ELECTRO-THERMAL SETTING DRIVE FOR CONTROL AND SHUT-OFF FITTINGS IN HEATING AND AIR-CONDITIONING INSTALLATIONS
SYSTEME DE COMMANDE ELECTROTHERMIQUE POUR VANNES DE REGULATION ET D'ARRET D'INSTALLATIONS DE CHAUFFAGE ET DE CLIMATISATION

(30) Priorität: 28.10.1993 DE 4336794
(43) Veröffentlichungstag der Anmeldung: 14.08.1996
(73) Patentinhaber: METALLWERKE NEHEIM GOECKE & Co. GmbH, 59755 Arnsberg (DE)
(72) Erfinder: LETZEL, Helmut, D-59755 Arnsberg (DE)
(74) Vertreter: Herzbach, Dieter, Dipl.-Ing.
(86) Internationale Anmeldenummer: DE9401259
(87) Internationale Veröffentlichungsnummer: WO9512156

(56) Entgegenhaltungen:
- DE-A- 3 808 254
- DE-B- 1 166 006
- GB-A- 2 138 937
- GB-A- 2 138 938
- US-A- 2 989 281

## Beschreibung

Die Erfindung betrifft einen elektrothermischen Stellantrieb für Regel- und Absperrarmaturen an heiz- und klimatechnischen Anlagen, bei dem über einen anliegenden Kaltleiterwiderstand die seinem Arbeitskolben gegenüberliegende Stirnseite eines ortsfest sich in einem Gehäuse abstützenden thermischen Ausdehnungselementes erwärmbar ist.

Bekannt ist beispielsweise ein solcher Stellantrieb im Regelkreis zur Durchflußregelung eines flüssigen oder gasförmigen Mediums aus der DE-OS 26 25 561. Während bei temperaturabhängigen Antriebselementen im allgemeinen Hubbegrenzungsmittel nötig sind, beispielsweise durch einen Endschalter für die Heizwirkung, können wegen des Charakters des Kaltleiterwiderstandes (PTC) derartige Hubbegrenzungsmittel entfallen, da die Hubbegrenzung über die einen vorbestimmten Hub des mit temperaturabhängigen Ausdehnungsstoffes gefüllten Ausdehnungselementes entsprechend vorwählbare Temperatur gelöst wird. Der verschiebbare Arbeitskolben eines solchen Ausdehnungselementes wird im allgemeinen durch externe Mittel bei Abkühlung des PTC wieder zurückbewegt. Bei dem bekannten Stellantrieb ist an der dem Arbeitskolben gegenüberliegenden Stirnseite des Ausdehnungselementes ein Kaltleiterwiderstand anliegend angeordnet, über den das Ausdehnungselement erwärmbar ist.

Derartige elektrothermische Stellantriebe erreichen ihre Grenze meistens mit dem erreichbaren Stellhub. Häufig werden jedoch größere Hübe benötigt, wobei Stromverbrauch und Schaltzeit möglichst gering bleiben sollen. Ein üblicher Dauer-Stromverbrauch liegt bei max. 2 W. Die Aufheizzeiten betragen max. 3 - 5 min. Es sind in der Regel bei großer Schalthäufigkeit Abkühlzeiten unter 5 min. erwünscht, auch bei höheren Umgebungstemperaturen.

Zur Erzielung des größeren Stellhubes ist es aus dem DE-GM 91 02 294 bekannt, zwei Ausdehnungselemente zu verwenden, die mit ihren Arbeitskolben gegeneinander gerichtet sind. Bei diesen Konstruktionen erfolgt jedoch die Erwärmung in der Regel über das zu steuernde Medium, welches die Ausdehnungselemente umströmt.

Der thermische Wirkungsgrad eines elektrothermischen Stellantriebes der gattungsgemäßen Art wird in starkem Maße beeinträchtigt durch die hohen Abstrahlungsverluste infolge der stirnseitigen Anordnung des Kaltleiterwiderstandes am Ausdehnungselement. Eine Isolierung ist in der Regel nicht geeignet, da dadurch die Abkühlzeiten wieder unzulässig heraufgesetzt werden. Es ist daher vorgeschlagen worden, den Kaltleiterwiderstand im Inneren des Ausdehnungselementes anzuordnen. Solche Konstruktionen sind jedoch sehr viel kostenaufwendiger.

Die Aufgabe der Erfindung besteht darin, bei einem elektrothermischen Stellantrieb der eingangs genannten Art den erreichbaren Stellhub zu vergrößern, dabei den thermischen Wirkungsgrad zu verbessern und die Herstellungskosten niedrig zu halten.

Gelöst wird die Erfindungsaufgabe mit einem elektrothermischen Stellantrieb mit den Merkmalen des Anspruchs 1. Infolge der Reihenanordnung von Ausdehnungselement, Kaltleiterwiderstand und einem weiteren Ausdehnungselement wird erreicht, daß mit den beiden relativ großen Flächen des in der Regel scheibenförmigen Kaltleiterwiderstandes beide Ausdehnungselemente, die möglichst gleiche Hubtemperaturkurve aufweisen, beaufschlagt werden. Die wirksame Abstrahlungsfläche am Kaltleiterwiderstand ist wegen der geringen Höhe dieses Elementes nur gering, sodaß ein hoher thermischer Wirkungsgrad infolge verminderter Abstrahlungsverluste erreicht wird. Bei relativ geringem Stromverbrauch wird ein vergrößerter Hub, beispielsweise ein verdoppelter Hub, erzielt. Die Herstellungskosten eines solchen Stellantriebes sind gegenüber den notwendigen Aufwendungen an einem einzelnen Ausdehnungselement mit entsprechend großem Stellhub niedriger anzusetzen. Die Ein- und Ausschaltzeiten entsprechen nahezu denen eines entsprechenden Stellantriebes mit einem einzigen entsprechend beheizten Ausdehnungselement.

Zur Erfindung gehört auch ein Stellantrieb nach den Ansprüchen 3 und/oder 4 bis 6. Vorgeschlagen wird dabei ein Stellantrieb mit konstruktiv einfachem Aufbau bei federnder Anpressung des Kaltleiterwiderstandes an die Stirnseiten der beiden Ausdehnungselemente und ggfs. mit einer Überlastfeder zur Verhinderung der Beschädigung des linearen Stellantriebes.

Anhand eines abgebildeten Ausführungsbeispieles wird die Erfindung im folgenden näher erläutert. Es zeigen:
- Fig. 1: die Reihenanordnung von zwei Ausdehnungselementen mit zwischen ihren Stirnseiten angeordnetem Kaltleiterwiderstand
und
- Fig. 2: eine Schnittdarstellung durch einen solchen in einem Gehäuse angeordneten Stellantrieb.

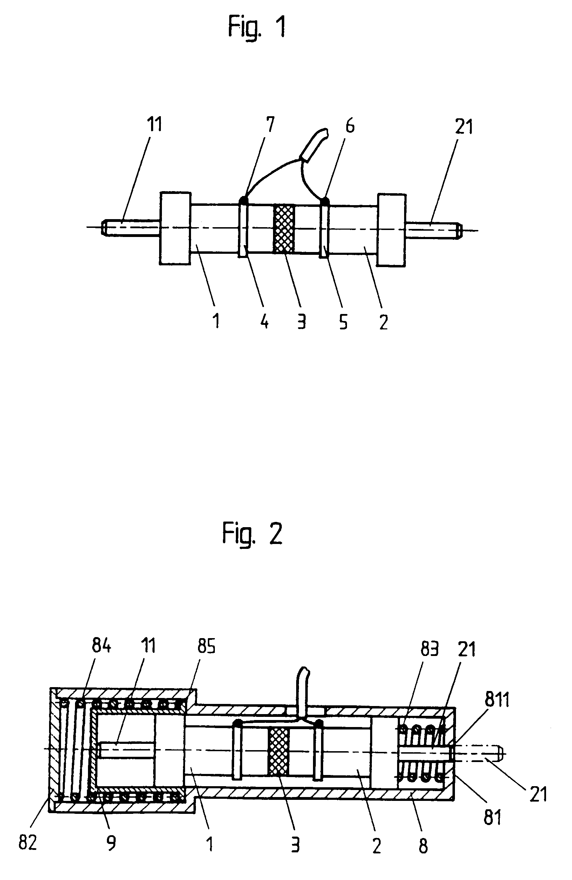

Kern eines erfindungsgemäßen elektrothermischen Stellantriebes ist die Reihenanordnung von zwei in Fig. 1 dargestellten Ausdehnungselementen 1 und 2, deren Arbeitskolben 11 und 21 entgegengesetzt gerichtet sind. Zwischen den beiden Ausdehnungselementen 1 und 2 ist ein Kaltleiterwiderstand (PTC) die Stirnseiten berührend angeordnet. Zur Stromzuführung sind an beiden Ausdehnungselementen 1 und 2 Kontaktringe 4 und 5 aufgesetzt, an denen die elektrischen Anschlußleitungen 6 und 7 angebunden sind.

Das in Fig. 1 dargestellte Element ist in einem als Ausführungsbeispiel bestimmten Gehäuse 8 in Fig. 2 eingeordnet. Ein solcher Stellantrieb kann beispielsweise Verwendung finden bei der Betätigung eines Regelventiles für eine Heizungsanlage. Die im Prinzip ortsfeste Seite bildet das Ausdehnungselement 1 mit seinem Arbeitskolben 11. Der Arbeitskolben 21 des anderen Ausdehnungselementes 2 ragt als Stellantrieb mit seinem Arbeitskolben 21 durch die Bohrung 811 im Boden 81 des Gehäuses 8. Gestrichelt angedeutet ist die Endstellung des Arbeitskolbens 21. Zusammengedrückt wird die Einheit aus den beiden Ausdehnungselementen 1 und 2 und dem dazwischen angeordneten Kaltleiterwiderstand 3 durch die Druckfeder 83, die sich zwischen dem Boden 81 des Gehäuses 8 und dem Ausdehnungselement 2 abstützt.

Mit einem Überlastschutz ist ein solcher Stellantrieb ausgerüstet. Der Arbeitskolben 11 des Ausdehnungselementes 1 stützt sich dazu in einem topfartigen Element 9 ab, welches begrenzt gegen den Druck der Überlastfeder 84 im Gehäuse 8 verschiebbar ist. Der entsprechende Gehäuseabschnitt ist abgesetzt. Bei Normalbetrieb drückt die sich an der Stirnplatte 82 abstützende Überlastfeder 84 das topfartige Element mit seinem Außenflansch gegen den Absatz 85 im Gehäuse 8.

## Patentansprüche

1. Elektrothermischer Stellantrieb für Regel - und Absperrarmaturen an heiz- und klimatechnischen Anlagen, bei dem über einen anliegenden Kaltleiterwiderstand die seinem Arbeitskolben gegenüberliegende Stirnseite eines ortsfest sich in einem Gehäuse abstützenden thermischen Ausdehnungselementes erwärmbar ist, **dadurch gekennzeichnet**, daß zwischen zwei in Reihe mit entgegengesetzter Arbeitsrichtung ihrer Arbeitskolben (11,21) angeordneten Ausdehnungselementen (1, 2) ein gemeinsamer Kaltleiterwiderstand (3) angeordnet ist.

2. Stellantrieb nach Anspruch 1, **dadurch gekennzeichnet**, daß die Ausdehnungselemente (1, 2) und der Kaltleiterwiderstand (3) unter Federdruck gegeneinander gehalten sind.

3. Stellantrieb nach Anspruch 1 und 2, **dadurch gekennzeichnet**, daß die Einheit aus Ausdehnungselementen (1, 2) und Kaltleiterwiderstand (3) in einem Gehäuse (8) angeordnet ist, wobei der Arbeitskolben (11) des einen Ausdehnungselementes (1) sich im Gehäuse (8) abstützt und der Arbeitskolben (21) des mit einer Druckfeder (83) beaufschlagten anderen Ausdehnungselementes (2) nach außen ragt.

4. Stellantrieb nach Anspruch 3, **dadurch gekennzeichnet**, daß sich das im Gehäuse abstützende Ausdehnungselement (1) zumindest mit seinem Arbeitskolben (11) in einem topfartigen Element (9) aufgenommen ist, welches gegen den Druck einer Überlastfeder (84) im Gehäuse (8) begrenzt verschiebbar ist.

5. Stellantrieb nach Anspruch 4, **dadurch gekennzeichnet,** daß das topfartige Element (9) von der Überlastfeder (84) gesichert an einem Innenabsatz (85) des Gehäuses angedrückt gehalten ist.

6. Stellantrieb nach Anspruch 1, **dadurch gekennzeichnet**, daß auf den zylindrischen Ausdehnungselementen (1, 2) Kontaktringe (5, 4) angeordnet sind, die mit elektrischen Anschlußleitungen (6, 7) verbunden sind.

## Claims

1. Electrothermal actuator for control and shut-off valves in heating and air-conditioning installations, at which a thermal expansion element which is stationarily abutting against a housing is heatable by a PCT resistor at its front side opposite to the working piston, **characterized in that** in between two cxpansion elements (1, 2) which are arranged in series and which have working pistons (11, 21) with opposite working direction one common PCT resistor (3) is arranged.

2. Actuator according to claim 1, **characterized in that** the expansion elements (1, 2) and the PCT resistor (3) are pressed together under spring force.

3. Actuator according to claim 1 and 2, **characterized in that** the unit consisting of the expansion elements (1, 2) and the PCT resistor (3) is arranged within a housing (8), whereat the working piston (11) of one expansion element (1) is abutting within the housing (8) and the working piston (21) of the other expansion element (2) which is loaded by a compression spring (83) is projecting to the outside.

4. Actuator according to claim 3, **characterized in that** the expansion element (1) abutting within the housing with its working piston (11) at least is contained within a cup-shaped element (9) which element against the pressure of an overload spring (84) is finitely displaceable within the housing (8).

5. Actuator according to claim 4, **characterized in that** the cup-shaped element (9) by means of the overload spring (84) is safely pressed against an inner shoulder (85) of the housing.

6. Actuator according to claim 1, **characterized in that** on the cylindrical expansion elements (1, 2) contact rings (5, 4) are provided which are connected to electrical branch lines (6, 7).

## Revendications

1. Dispositif de commande de régulation électrothermique pour des vannes de régulation et d'arrêt d'installations de chauffage et de climatisation, dans lequel une résistance appliquée formée d'un conducteur à froid peut chauffer la face frontale d'un élément de dilatation thermique monté fixe dans un boîtier, qui est située à l'opposé du piston de travail de cet élément de dilatation thermique, caractérisé en ce qu'une résistance commune formée d'un conducteur à froid (3) est disposée entre deux éléments de dilatation (1, 2) montés en série et de telle sorte que leurs pistons de travail (11, 21) ont des directions de travail opposées.

2. Dispositif de commande de régulation selon la revendication 1, caractérisé en ce que les éléments de dilatation (1, 2) et la résistance (3) formée d'un conducteur à froid sont maintenus les uns contre les autres au moyen de la pression d'un ressort.

3. Dispositif de commande de régulation selon les revendications 1 et 2, caractérisé en ce que l'unité constituée par les éléments de dilatation (1, 2) et la résistance (3) formée par un conducteur à froid sont disposées dans un boîtier (8), le piston de travail (11) d'un élément de dilatation (1) prenant appui dans le boîtier (8), tandis que le piston de travail (21) de l'autre élément de dilatation (2) chargé par un ressort de pression (83) fait saillie à l'extérieur.

4. Dispositif de commande de régulation selon la revendication 3, caractérisé en ce que l'élément de dilatation (1), qui est monté dans le boîtier, est logé au moins par son piston de travail (11) dans un élément en forme de pot (9), qui peut être déplacé dans le boîtier (8) d'une manière limitée. à l'encontre de la pression d'un ressort de surcharge (84).

5. Dispositif de commande de régulation selon la revendication 4, caractérisé en ce que l'élément en forme de pot (9) est retenu en étant bloqué fermement, par le ressort de surcharge (84), contre un épaulement intérieur (85) du boîtier.

6. Dispositif de commande de régulation selon la revendication 1, caractérisé en ce que sur les éléments de dilatation cylindriques (1, 2) sont disposées des bagues de contact (5, 15), qui sont reliées à des conducteurs électriques de raccordement (6, 7).
